# EUROPÄISCHE PATENTSCHRIFT

(11) **EP 1 778 784 B1**
(45) Veröffentlichungstag und Bekanntmachung des Hinweises auf die Patenterteilung: **09.01.2008**
(21) Anmeldenummer: 05783083.8
(22) Anmeldetag: 09.08.2005
(51) Int. Cl.: C08L 25/04

(54) **POLYMERBLENDS AUS STYROLCOPOLYMEREN UND HYPERVERZWEIGTEN POLYCARBONATEN ODER POLYESTERN**
POLYMER BLENDS CONSISTING OF STYRENE COPOLYMERS AND OF HYPERBRANCHED POLYCARBONATES OR POLYESTERS
MELANGES POLYMERES A BASE DE COPOLYMERES STYRENE ET DE POLYCARBONATES OU DE POLYESTERS HYPERRAMIFIES

(30) Priorität: 10.08.2004 DE 102004038978
(43) Veröffentlichungstag der Anmeldung: 02.05.2007
(73) Patentinhaber: BASF AKTIENGESELLSCHAFT, 67056 Ludwigshafen (DE)
(72) Erfinder: MC KEE, Graham Edmund, 67433 Neustadt (DE); BRUCHMANN, Bernd, 67251 Freinsheim (DE); EIPPER, Andreas, 67067 Ludwigshafen (DE); BREULMANN, Michael, 68782 Brühl (DE); GOTTSCHALK, Axel, 67435 Neustadt (DE); STORK, Martin, 68199 Mannheim (DE); STUMBE, Jean-Francois, F-67200 Strasbourg (FR); NIESSNER, Norbert, 67159 Friedelsheim (DE); HECKMANN, Walter, 69469 Weinheim (DE)
(86) Internationale Anmeldenummer: PCT/EP2005/008608
(87) Internationale Veröffentlichungsnummer: WO 2006/018179

(56) Entgegenhaltungen:
- WO-A-97/45474
- WO-A-03/064524
- GB-A- 2 324 797
- US-B1- 6 630 520

## Beschreibung

Die Erfindung betrifft einen Polymerblend, enthaltend die Komponenten A) bis D), deren Summe 100 Gew.-% ergibt,
A) 50 bis 99,99 Gew.-% mindestens eines Styrolcopolymers A) aus vinylaraomatischen Monomeren und Comonomeren,
B) 0,01 bis 50 Gew.-% mindestens eines hoch- oder hyperverzweigten Polymers B), ausgewählt aus
   B1) hoch- oder hyperverzweigten Polycarbonaten B1) mit einer OH-Zahl von 1 bis 600 mg KOH/g Polycarbonat (gemäß DIN 53240, Teil 2), und
   B2) hoch- oder hyperverzweigten Polyestern B2) des Typs AₓB_{y} wobei x mindestens 1,1 und y mindestens 2,1 beträgt,
C) 0 bis 80 Gew.-% mindestens eines weiteren Polymers C), und
D) 0 bis 80 Gew.-% weitere Zusatzstoffe D).

Außerdem betrifft die Erfindung die Verwendung des Polymerblends zur Herstellung von Formkörpern, Folien, Fasern und Schäumen, sowie die aus dem Polymerblend erhältlichen Formkörper, Folien, Fasern und Schäume.

Styrolcopolymere aus Styrol und/oder anderen vinylaromatischen Monomeren, und Comonomeren wie Acrylnitril haben aufgrund ihrer guten mechanischen Eigenschaften, hohen Transparenz und guten Chemikalienbeständigkeit vielfältige Anwendungsgebiete, z.B. als Haushaltswaren, Verpackungen, Sanitärartikel, Schreibgeräte und Bürobedarf. Derartige Formteile werden in großen Stückzahlen üblicherweise im Spritzgussverfahren hergestellt. Um die Zykluszeit beim Spritzguss zu verkürzen, ist eine hohe Fließfähigkeit des Polymers erwünscht. Sie wird üblicherweise durch Zusatz von Polymeren mit niedrigem Molekulargewicht bzw. Oligomeren, erreicht; allerdings verschlechtern sich dadurch die mechanischen Eigenschaften, die Erweichungstemperatur (Vicat) und die Transparenz deutlich.

Dendritische Polymere (Dendrimere) lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen.

Dabei wächst mit jedem Verknüpfungsschritt die Zahl der Monomerendgruppen (und damit der Verknüpfungen) exponentiell an, und man erhält Polymere mit kugelförmigen Baumstrukturen, deren Äste exakt dieselbe Anzahl Monomereinheiten enthalten. Aufgrund dieser "perfekten" Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt werden müssen und Reinigungsoperationen erforderlich sind, weshalb man dendritische Polymere üblicherweise nur im Labormaßstab herstellt.

Jedoch kann man mit großtechnischen Verfahren hochverzweigte bzw. hyperverzweigte Polymere herstellen. Sie weisen neben perfekten dendritischen Strukturen auch lineare Polymerketten und ungleiche Polymeräste auf, was jedoch die Polymereigenschaften nicht wesentlich verschlechtert, verglichen mit den perfekten Dendrimeren. Hyperverzweigte Polymere lassen sich über zwei Synthesewege herstellen, die als AB₂ und A₂B₃ bekannt sind. Darin stehen A und B für verschiedene Monomere und die Indices für die Anzahl der funktionellen Gruppen, die in A bzw. B enthalten sind, also für die Funktionalität von A bzw. B. Beim AB₂-Weg wird ein monofunktionelles Monomer A mit einem difunktionellen Monomer B₂ umgesetzt. Bei der A₂B₃-Synthese setzt man ein mindestens difunktionelles Monomer A₂ mit einem mindestens trifunktionellen Monomer B₃ um.

Die WO 97/45474 beschreibt Polymermischungen aus hyperverzweigten dendritischen Polyestern und anderen Thermoplasten wie Polystyrol oder ABS (Acrylnitril-Butadien-Styrol-Copolymer), wobei beide Komponenten bestimmte, zu Pfropfreaktionen befähigte funktionelle Gruppen tragen. Diese Funktionalisierung des Thermoplasten erfolgt in einem separaten Schritt durch Pfropfung eines ungesättigten Monomers auf den Thermoplasten.

In der WO 96/11962 werden nichtlineare monovinylaromatische Polymere mit Kamm-, Stern- oder dendritischer Struktur beschrieben, die 1 bis 4 Verzweigungspunkte aufweisen. Die Polymere können Kautschuke enthalten; Mischungen der Polymere mit üblichen linearen Styrolcoppolymeren wie SAN (Styrol-Acrylnitril-Copolymer) werden jedoch nicht beschrieben.

Gorda et al beschreiben in J. of Aplied Polymer Science 1993, Vol. 50, Seiten 1977-1983 Mischungen aus SAN und sternförmigen Polymeren aus ε-Caprolacton. Sternförmige Polymere unterscheiden sich grundlegend von dendritischen oder hyperverzweigten Polymeren: bei dendritischen und hyperverzweigte Polymere nimmt die Anzahl der Verzweigungen mit wachsender Entfernung vom Zentrum exponentiell zu, d.h. die Zahl der Polymeräste wächst nach außen stark an. Hingegen weisen Sternpolymere unverzweigte Äste auf, d.h. die Funktionalität des Zentralmoleküls bestimmt die Anzahl der Sternäste. Zu dieser Unterscheidung siehe auch Seiten 7-8 der erwähnten WO 97145474 und dort insbesondere die Formeln (III) bis (VI).

Die EP-A 545184 beschreibt lineare, sternförmige oder dendrimere Blockcopolymere aus Acrylsäureestern und Methacrylsäureestern wie Methylmethacrylat (MMA), und deren Mischungen mit u.a. SAN. Die Blockcopolymere werden durch die sehr wasserempfindliche Gruppentransferpolymerisation (GTP) hergestellt. Dendritische Polymere ohne Blockstruktur werden nicht erwähnt.

Sunder et al. offenbaren in Macromolecules 200, 33, Seiten 1330-1337 mit Carbonsäuren veresterte, hyperverzweigte Polyglycerole. Mischungen dieser Polymere mit Styrolcopolymeren werden nicht erwähnt.

In der DE-A 43 28 004 werden thermoplastische Blockcopolymere mit sternförmig radial angeordneten Ästen, und deren Mischungen mit u.a. SAN, ABS oder ASA (Acrylnitril-Styrol-Acrylsäureester-Copolymer), beschrieben. Auch diese Blockcopolymere werden durch Gruppentransferpolymerisation (GTP) hergestellt, wozu rigoroser Feuchtigkeitsausschluss erforderlich ist. Dendritische Polymere ohne Blockstruktur werden nicht erwähnt.

In den nicht vorveröffentlichten Patentanmeldungen DE 102004 005652.8 und DE 102004 005657.9, beide vom 04.02.04, werden neue Fließverbesser für Polyester vorgeschlagen.

Es bestand die Aufgabe, alternative Polymermischungen (Blends) auf Basis von Styrolcopolymeren wie beispielsweise SAN bereitzustellen, die sich durch eine gute Fließfähigkeit auszeichnen. Der Fließverbesserer sollte sich in einfacher Weise herstellen lassen.

Die gute Fließfähigkeit sollte unter Erhalt der guten mechanischen, thermischen und optischen Eigenschaften der Styrolcopolymere erzielt werden. Insbesondere sollte die Wärmeformbeständigkeit (Vicat), die Mechanik (beispielsweise Elastizitätsmodul, Bruchdehnung und die Schlagzähigkeit) sowie die Transparenz auf ähnlichem Niveau liegen wie bei Styrolcopolymeren ohne Fließverbesserer.

Demgemäß wurden die eingangs definierten Polymerblends, deren genannte Verwendung, und die Formkörper, Folien, Fasern und Schäume aus den Polymerblends, gefunden. Bevorzugte Ausführungsformen der Erfindung sind den Unteransprüchen zu entnehmen.

Der Polymerblend enthält
A) 50 bis 99,99, bevorzugt 70 bis 99,9, insbesondere 80 bis 99,7 und besonders bevorzugt 90 bis 99,5 Gew.-% der Komponente A,
B) 0,01 bis 50, bevorzugt 0,1 bis 30, insbesondere 0,3 bis 20 und besonders bevorzugt 0,5 bis 10 Gew.-% der Komponente B,
C) 0 bis 80, bevorzugt 0 bis 60 und besonders bevorzugt 0 bis 50 Gew.-% der Komponente C, und
D) 0 bis 80, bevorzugt 0 bis 50 und besonders bevorzugt 0 bis 40 Gew.-% der Komponente D,
wobei die Mengen innerhalb der vorstehenden Bereiche derart gewählt sind, dass sich die Summe der Bestandteile zu 100 Gew.-% ergänzt. Die Komponenten C) und D) sind fakultativ.

### Komponente A)

Komponente A) ist ein Styrolcopolymer A) aus vinylaraomatischen Monomeren und Comonomeren. Üblicherweise enthält das Styrolcopolymer A)
A1) 1 bis 90, bevorzugt 50 bis 90 und besonders bevorzugt 55 bis 85 Gew.-% des vinylaromatischen Monomers A1), und
A2) 10 bis 99, bevorzugt 10 bis 50 und besonders bevorzugt 15 bis 45 Gew.-% des Comonomers A2).

Bevorzugt ist das Styrolcopolymer A) als solches kautschukfrei, jedoch kann der Polymerblend als optionale Komponente C) auch Kautschuke enthalten, wie sie weiter unten bei C) beschrieben werden.

Als vinylaromatische Monomere A1) kommen beispielsweise in Betracht: Styrol, α-Methylstyrol, und mit C₁₋₁₀-Alkylresten ringsubstituierte Styrole wie p-Methylstyrol, Ethylstyrol, tert.-Butylstyrol, Vinylstyrol, Vinyltoluol, außerdem 1,2-Diphenylethylen, 1,1-Diphenylethylen, die Vinylnaphthaline oder deren Mischungen. Styrol, α-Methylstyrol, p-Methylstyrol und Vinylnaphthalin sind bevorzugt, Styrol und α-Methylstyrol besonders bevorzugt.

Als Comonomere A2) sind z.B. geeignet:
1) Nitrile wie Acrylnitril oder Methacrylnitril,
2) C₁- bis C₁₂-Alkylester der Acrylsäure bzw. der Methacrylsäure. Bevorzugte Acrylsäurealkylester sind Ethylacrylat und die Methacrylate. Es können auch Mischungen verschiedener Acrylsäurealkylester verwendet werden, die sich in ihrem Alkylrest unterscheiden. Als Methacrylsäurealkylester ist insbesondere Methylmethacrylat geeignet.
3) konjugierte Diene wie Butadien, Isopren und Chloropren, weiterhin auch Norbornen und Dicyclopentadien,
4) die Glycidylester Glycidylacrylat und -methacrylat,
5) N-substituierte Maleinimide wie N-Methyl-, N-Butyl-, N-Phenyl- und N-Cyclohexylmaleinimid,
6) Acrylsäure, Methacrylsäure, weiterhin Dicarbonsäuren wie Maleinsäure, Fumarsäure und ltaconsäure sowie deren Anhydride wie Maleinsäureanhydrid,
7) Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid,
8) aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat.
9) ungesättigte Ether wie Vinylmethylether, sowie Mischungen der vorgenannten Monomere.

Davon sind bevorzugt: Acrylnitril, Methacrylnitril, Acrylamid und Methacrylamid, Acrylsäure- und Methacrylsäureverbindungen wie Methylmethacrylat, Maleinsäureverbindungen wie Maleinsäureanhydrid, N-Phenylmaleinimid und N-Alkylmaleinimide wie N-Methylmaleinimid, N-Butylmaleinimid, N-Isopropylmaleinimid und N-Cyclohexylmaleinimid, oder deren Mischungen.

Besonders bevorzugt ist das Comonomer A2) ausgewählt aus Acrylnitril, Methacrylnitril, Methylmethacrylat, Maleinsäureanhydrid, N- Phenylmaleinimid und N-Alkylmaleinimiden, ganz besonders bevorzugt ist Acrylnitril.

In einer bevorzugten Ausführungsform ist das Styrolcopolymer A) ein Styrol-Acrylnitril-Copolymer (SAN). Darin können bevorzugt bis zu 50 Gew.-% des Styrols durch α-Methylstyrol, und/oder bis zu 50 Gew.-% des Acrylnitrils durch Methacrylnitril ersetzt sein. Besonders bevorzugt ist das Styrolcopolymer A) ein Styrol-Acrylnitril-Copolymer mit einem Acrylnitrifgehalt von 15 bis 45, insbesondere 17 bis 40 Gew.-%.

Das gewichtsmittlere Molekulargewicht des Styrolcopolymers A) beträgt in der Regel 10.000 bis 2.000.000 g/mol.

Die Viskositätszahl des Styrolcopolymers beträgt üblicherweise 45 bis 200, bevorzugt 45 bis 140 und vorzugsweise 50 bis 120 ml/g, bestimmt an einer 0,5 gew.-%igen Lösung bei 25°C nach DIN 53726. Die Viskositätszahl von SAN wird beispielsweise bei 25°C an einer 0,5 gew.-%igen Lösung in Dimethylformamid (DMF) ermittelt.

Das Styrolcopolymer A) kann man in an sich bekannter Weise, z.B. durch Substanz-, Lösung- Suspensions-, Fällungs- oder Emulsionspolymerisation erhalten. Einzelheiten dieser Verfahren sind z.B. im Kunststoffhandbuch, Hrg. Vieweg und Daumiller, Carl-Hanser-Verlag München, Bd. 1 (1973), S. 37 bis 42 und Bd. 5 (1969), S. 118 bis 130, sowie in Ullmanns Encyklopädie der technischen Chemie, 4. Aufl., Verlag Chemie Weinheim, Bd. 19, S. 107 bis 158 "Polymerisationstechnik", beschrieben.

### Komponente B)

Die Komponente B ist ein hoch- oder hyperverzweigtes Polymer B), ausgewählt aus
B1) hoch- oder hyperverzweigten Polycarbonaten B1) mit einer OH-Zahl von 1 bis 600 mg KOH/g Polycarbonat (gemäß DIN 53240, Teil 2), und
B2) hoch- oder hyperverzweigten Polyestern B2) des Typs AₓB_{y} wobei x mindestens 1,1 und y mindestens 2,1 beträgt.

Man kann entweder Polycarbonate B1) oder Polyester B2) oder beide Komponenten B1) und B2) verwenden. Sofern man Mischungen von B1) und B2) verwendet, beträgt das Mischungsverhältnis B1) : B2) in der Regel von 1 : 20 bis 20 : 1, bevorzugt von 1 : 15 bis 15 : 1, insbesondere 1 : 5 bis 5 : 1, bezogen auf das Gewicht.

### Komponente B1)

Unter hyperverzweigten Polycarbonaten B1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Vorzugsweise weist die Komponente B1) ein Zahlenmittel des Molekulargewichtes Mₙ von 100 bis 15000, vorzugsweise von 200 bis 12000 und insbesondere von 500 bis 10000 g/mol (GPC, Standard PMMA).

Die Glasübergangstemperatur Tg beträgt insbesondere von -80°C bis -140, vorzugsweise von -60 bis 120°C (gemäß DSC, DIN 53765).

Insbesondere beträgt die Viskosität (mPas) bei 23°C (gemäß DIN 53019) von 50 bis 200000, insbesondere von 100 bis 150000 und ganz besonders bevorzugt von 200 bis 100000.

Die Komponente B1) ist vorzugsweise erhältlich durch ein Verfahren, welches mindestens die folgenden Schritte umfasst:
a) Umsetzung mindestens eines organischen Carbonats (1) der allgemeinen Formel RO(CO)OR mit mindestens einem aliphatischen Alkohol (11), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, araliphatischen oder aromatischen Kohlenwasserstoffrest mit 1 bis 20 C-Atomen handelt, sowie
b) intermolekulare Umsetzung der Kondensationsprodukte (K) zu einem hochfunktionellen, hoch- oder hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Bei den Resten R der als Ausgangsmaterial eingesetzten organischen Carbonate (1) der allgemeinen Formel RO(CO)OR handelt es sich jeweils unabhängig voneinander um einen geradkettigen oder verzweigten aliphatischen, araliphatischen oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (11), welcher mindestens 3 OH-Gruppen aufweist, oder Gemischen zweier oder mehrerer verschiedener Alkohole, umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Bis(trimethylolpropan), Tetrahydroxyethylisocyanurat oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (II') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, difunktionelle Polyether- oder Polyesterole.

Die Reaktion des Carbonats mit dem Alkohol oder Alkoholgemisch zum erfindungsgemäßen hochfunktionellen hochverzweigten Polycarbonat erfolgt in der Regel unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate B1) ist es notwendig, das Verhältnis von den OH-Gruppen enthaltenden Verbindungen zu dem Carbonat so einzustellen, dass das resultierende einfachste Kondensationsprodukt (im weiteren Kondensationsprodukt (K) genannt) im Mittel entweder eine Carbonatgruppe und mehr als eine OH-Gruppe oder eine OH-Gruppe und mehr als eine Carbonatgruppe enthält. Die einfachste Struktur des Kondensationsproduktes (K) aus einem Carbonat (1) und einem Di- oder Polyalkohol (II) ergibt dabei die Anordnung XYₙ oder YₙX, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

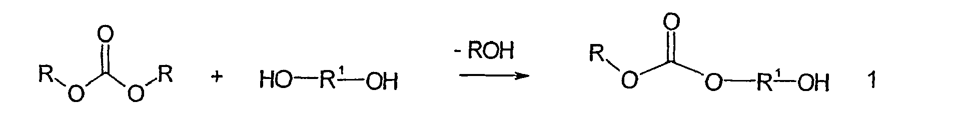

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY₂, veranschaulicht durch die allgemeine Formel 2. Fokale Gruppe ist hier eine Carbonatgruppe.

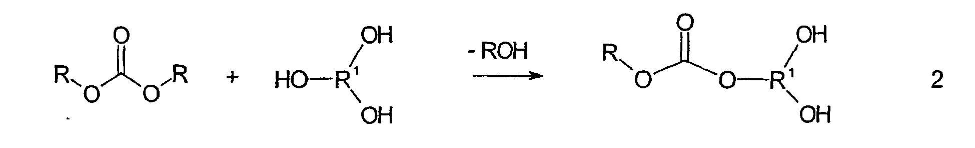

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY₃, veranschaulicht durch die allgemeine Formel 3. Fokale Gruppe ist hier eine Carbonatgruppe.

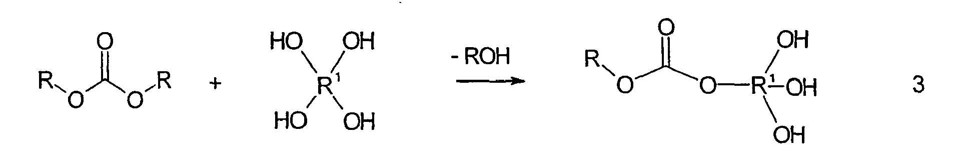

In den Formeln 1 bis 3 hat R die eingangs definierte Bedeutung und R¹steht für einen aliphatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs X₂Y, fokale Gruppe ist hier eine OH-Gruppe. In der Formel 4 haben R und R¹ die gleiche Bedeutung wie in den Formeln 1 bis 3.

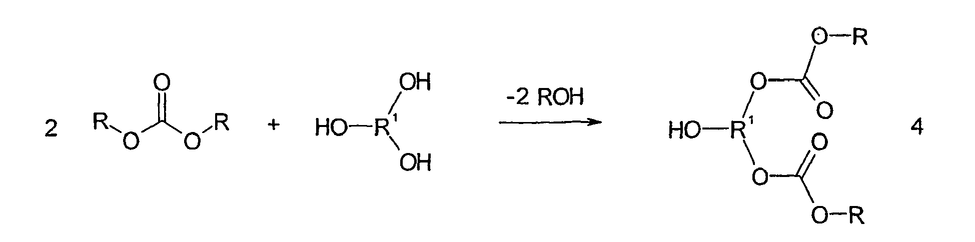

Werden zu den Komponenten zusätzlich difunktionelle Verbindungen, z.B ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs XY₂, fokale Gruppe ist eine Carbonatgruppe.

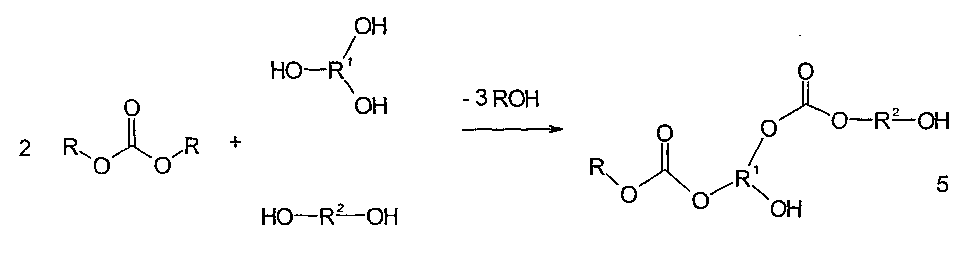

In Formel 5 bedeutet R² einen organischen, bevorzugt aliphatischen Rest, R und R¹ sind wie vorstehend beschrieben definiert.

Die beispielhaft in den Formeln 1-5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenwert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Kätalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), lmidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polyköndensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

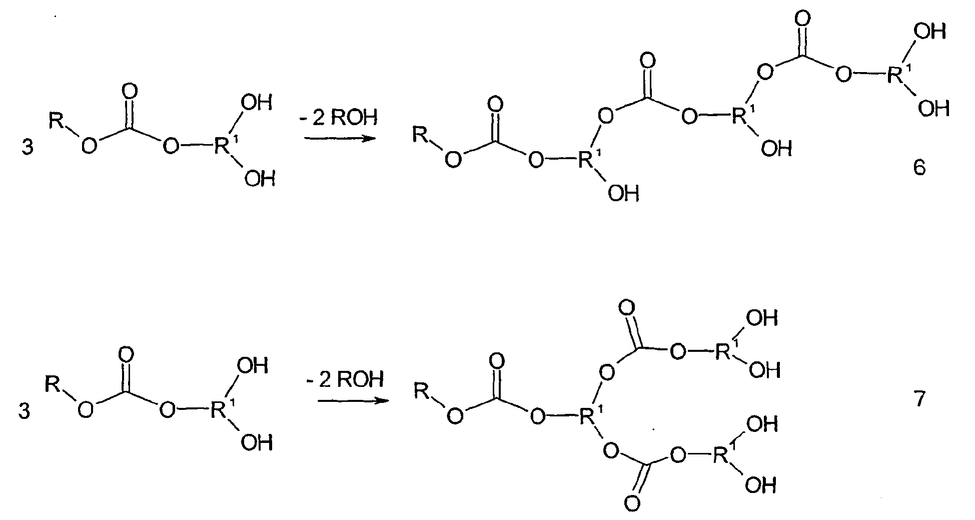

In Formel 6 und 7 sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten von den Carbonat-oder Hydroxylgruppen verschiedenen Funktionalitäten.

Derartige Effekte lassen sich zum Beispiel durch Zusatz von Verbindungen während der Polykondensation erzielen, die neben Hydroxylgruppen oder Carbonatgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polycarbonate.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-Gruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Ein großer Vorteil des Verfahrens zur Herstellung von B1) liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

### Komponente B2)

Als Komponente B2) enthalten die erfindungsgemäßen Polymerblends mindestens einen hyperverzweigten Polyester des Typs AₓB_{y}, wobei
- x: mindestens 1,1 vorzugsweise mindestens 1,3, insbesondere mindestens 2
- y: mindestens 2,1, vorzugsweise mindestens 2,5, insbesondere mindestens 3
beträgt.

Selbstverständlich können als Einheiten A bzw. B auch Mischungen eingesetzt werden.

Unter einem Polyester des Typs AₓB_{y} versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern B2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Die Komponente B2) weist vorzugsweise ein Mₙ von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist B2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die T_{g} beträgt vorzugsweise von -50°C bis 140°C und insbesondere von -50 bis 100°C (mittels DSC, nach DIN 53765).

Insbesondere solche Komponenten B2) sind bevorzugt, in denen mindestens eine OH- bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente B2) erhältlich, u.z. indem man
(a) eine oder mehrere Dicarbonsäuren oder eines oder mehrere Derivate derselben mit einem oder mehreren mindestens trifunktionellen Alkoholen
   oder
(b) eine oder mehrere Tricarbonsäuren oder höhere Polycarbonsäuren oder eines oder mehrere Derivate derselben mit einem oder mehreren Diolen
in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester B2) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-a,w-dicarbonsäure, Dodecan-a,w-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus
C₁-C₁₀-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.
   Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.
   Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.
   Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.
   Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.
   Tricarbonsäuren oder Polycarbonsäuren lassen sich in der erfindungsgemäßen Reaktion entweder als solche oder aber in Form von Derivaten einsetzen.
   Unter Derivaten werden bevorzugt verstanden
- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester
- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente B2) zu erhalten.

Als Diole für Variante (b) verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol, 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH_{3]}CH₂O)ₙ-H oder Gemische von zwei oder mehr Vertretern der voranstehenden Verbindungen, wobei n eine ganze Zahl ist und n = 4. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis der Moleküle A zu Molekülen B im AₓB_{y}-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von mono- oder Dicarbonsäuren.

Das Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel Al(OR)₃ und Titanate der allgemeinen Formel Ti(OR)₄ als saure anorganische Katalysatoren einsetzbar, wobei die Reste R jeweils gleich oder verschieden sein können und unabhängig voneinander gewählt sind aus

C₁-C₁₀-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in Al(OR)₃ bzw. Ti(OR)₄ jeweils gleich und gewählt aus Isopropyl oder 2-Ethylhexyl.

Bevorzugte saure metallorganische Katalysatoren sind beispielsweise gewählt aus Dialkylzinnoxiden R₂SnO, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure lonentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das Verfahren zu Herstellung von B2) wird üblicherweise unter Inertgasatmosphäre durchgeführt, das heißt beispielsweise unter Kohlendioxid, Stickstoff oder Edelgas, unter denen insbesondere Argon zu nennen ist.

Das Verfahren wird in der Regel bei Temperaturen von 60 bis 200°C durchgeführt. Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente B2) in Gegenwart von Enzymen oder Zersetzungsprodukten von Enzymen hergestellt werden (gemäß DE-A 101 63163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geolrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Bei Verwendung von Enzymen wird das Verfahren üblicherweise bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Das Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des enzymkatalysierten Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Die nach dem Verfahren erhältlichen hochfunktionellen, hyperverzweigten Polyester B2) zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass der Verzweigungsgrad (Degree of branching), das heißt die mittlere Anzahl von dendritischen Verknüpfungen plus die mittlere Anzahl von Endgruppen pro Molekül 10 - 99,9 %, bevorzugt 20 - 99 %, besonders bevorzugt 30 - 90 % beträgt (siehe dazu H. Frey et al. Acta Polym. 1997, 48, 30).

Die erfindungsgemäßen Polyester B2) haben ein Molekulargewicht M_{w} von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester B2) sind carboxyterminiert, carboxy- und Hydroxylgruppen-terminiert und vorzugsweise Hydroxylgruppen-terminiert.

Bei den eingesetzten hyperverzweigten Polycarbonaten B1) bzw. Polyestern B2) handelt es sich bevorzugt um Partikel mit einer Größe von 20 bis 500 nm (vor der Einarbeitung in das Polymer). Diese Nanopartikel liegen im Polymerblend fein verteilt vor, die Größe der Partikel im Polymerblend beträgt von 20 bis 500 nm, vorzugsweise 50 bis 300 nm.

Man kann die hyperverzweigten Polycarbonate bzw. Polyester als solche, oder als Mischung mit anderen Polymeren einsetzen, wie sie weiter unten als Komponente C) beschrieben werden. Polymermischungen aus hyperverzweigten Polycarbonaten B1) bzw. Polyestern B2) und üblichen Polyestern wie Polybutylenterephthalat (PBT sind im Handel als Ultradur ® High Speed von BASF erhältlich. Übliche Polyester wie PBT zählen zur optionalen Komponente C).

### Komponente C)

Als optionale Komponente C) kommen prinzipiell alle von den Komponenten A), B) und D) verschiedenen Polymere in Betracht. Geeignete Polymere C) sind beispielsweise:

### 1. Von Komponente A) verschiedene vinylaromatische Polymere

Das gewichtsmittlere Molekulargewicht dieser an sich bekannten und im Handel erhältlichen Polymere liegt im allgemeinen im Bereich von 1.500 bis 2.000.000, vorzugsweise im Bereich von 70.000 bis 1.000.000. Die Polymere könne kautschukfrei oder kautschukhaltig sein.

Geeignete vinylaromatische Polymere aus den bei Komponente A) bereits genannten vinylaromatischen Monomeren und Comonomeren sind insbesondere kautschukfreies Polystyrol (GPPS = general purpose polystyrene) und schlagzäh modifiziertes Polystyrol (HIPS = high hmpact polystyrene). Es versteht sich, daß auch Mischungen dieser Polymeren eingesetzt werden können. Die Herstellung erfolgt vorzugsweise nach dem in der EP-A-302 485 beschriebenen Verfahren.

Zu den vinylaromatischen Polymeren zählen auch Copolymere aus vinylaromatischen Monomeren und Dienen, beispielsweise Styrol und Butadien oder Isopren, wobei die Diene ganz oder teilweise hydriert sein können. Solche Copolymere können z.B. statistisch aufgebaut sein, oder eine Blockstruktur aus Vinylaromatblöcken und Dienblöcken aufweisen, oder eine tapered-Struktur (Gradient entlang der Polymerkette von dienarm nach dienreich) aufweisen. Die Copolymere können linear, verzweigt oder sternförmig aufgebaut sein. Die Blockcopolymere können zwei oder mehr Blöcke aufweisen, und die Blöcke können auch statistisch oder tapered sein.

Derartige Copolymere aus Styrol und Dienen sind z.B. als Styrolux® oder Styroflex® von BASF erhältlich.

### 2. Kautschuke

Als Kautschuke sind insbesondere ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol) geeignet. Bevorzugt handelt es sich um Pfropfkautschuke P.

Geeignete Kautschuke enthalten beispielsweise
- einen Dienkautschuk auf Basis von Dienen, wie z.B. Butadien oder Isopren,
- einen Alkylacrylatkautschuk auf Basis von Alkylestern der Acrylsäure, wie n-Butylacrylat und 2-Ethylhexylacrylat,
- einen Ethylenkautschuk, z.B. EP(D)M-Kautschuk auf Basis von Ethylen, Propylen und ggf. einem Dien, oder einen Ethylen-Copolymerkautschuk aus Ethylen und anderen Olefinen, insbesondere α-Olefinen mit bis zu 10 C-Atomen,
- einen Siliconkautschuk wie z.B. in der DE-A 37 25 576, der EP-A 235 690, der DE-A 38 00 603 und der EP-A 319 290 beschrieben,
oder Mischungen dieser Kautschuke bzw. Kautschukmonomeren.

Bevorzugte Pfropfkautschuke P enthalten, bezogen auf P,
a1) 30 bis 95, bevorzugt 40 bis 90 und besonders bevorzugt 40 bis 85 Gew.-% einer kautschukelastischen Grundstufe aus, bezogen auf a1)
   a11) 50 bis 100, bevorzugt 60 bis 100 und besonders bevorzugt 70 bis 100 Gew.-% eines (C₁-C₁₀-Alkyl)esters der Acrylsäure,
   a12) 0 bis 10, bevorzugt 0 bis 5 und besonders bevorzugt 0 bis 4 Gew.-% eines polyfunktionellen, vernetzenden Monomeren,
   a13) 0 bis 40, bevorzugt 0 bis 30 und besonders bevorzugt 0 bis 20 Gew.-% von einem oder mehreren weiteren monoethylenisch ungesättigten Monomeren,
   oder aus
   a11*) 50 bis 100, bevorzugt 60 bis 100 und besonders bevorzugt 65 bis 100 Gew.-% eines Diens mit konjugierten Doppelbindungen,
   a12*) 0 bis 50, bevorzugt 0 bis 40 und besonders bevorzugt 0 bis 35 Gew.-% von einem oder mehreren monoethylenisch ungesättigten Monomeren,
   oder aus
   a11**) 50 bis 100, bevorzugt 60 bis 100 und besonders bevorzugt 65 bis 100 Gew.-% einer Mischung aus Ethylen, weiteren Olefinen und ggf. einem Dien,
   a12**) 0 bis 50, bevorzugt 0 bis 40 und besonders bevorzugt 0 bis 35 Gew.-% von einem oder mehreren weiteren monoethylenisch ungesättigten Monomeren,
   oder aus
   a11***) einem vernetzten oder unvernetzten Polysiloxankautschuk, und
a2) 5 bis 70, bevorzugt 10 bis 60 und besonders bevorzugt 15 bis 60 Gew.-% einer oder mehreren Pfropfstufen aus, bezogen auf a2),
   a21) 50 bis 100, bevorzugt 60 bis 100 und besonders bevorzugt 65 bis 100 Gew.-% einer Styrolverbindung der allgemeinen Formel 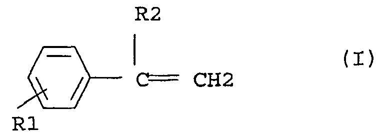 in der R¹ und R² für Wasserstoff oder C₁- bis C₈-Alkyl stehen.
      oder eines (C₁-C₈-Alkyl)esters der Acrylsäure oder Methacrylsäure,
      oder Mischungen der Styrolverbindung und des (C₁-C₈-Alkyl)esters der Acrylsäure oder Methacrylsäure,
   a22) 0 bis 40, vorzugsweise 0 bis 38 und besonders bevorzugt 0 bis 35 Gew.-% Acrylnitril oder Methacrylnitril oder deren Mischungen, und
   a23) 0 bis 40, vorzugsweise 0 bis 30 und insbesondere 0 bis 20 Gew.-% von einem oder mehreren weiteren monoethylenisch ungesättigten, von b2) verschiedenen Monomeren.

Dabei bedeutet kautschukelastisch, dass das Polymer der Grundstufe a1) bevorzugt eine Glasübergangstemperatur Tg von maximal 0°C, insbesondere maximal -10°CV aufweist, also ein weiches Polymer ist. Hingegen ist das Polymer der Pfropfauflage a2) bevorzugt hart mit einer Tg über 0°C.

Als (C₁-C₁₀-Alkyl)ester der Acrylsäure, Komponente a11), eignen sich vor allem Ethylacrylat, Octylacrylate wie 2-Ethylhexylacrylat und n-Octylacrylat, und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

Vernetzende Monomere a12) sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols (siehe DE-OS 12 60 135), der unter dem Namen Dihydrodicyclopentadienylacrylat bekannt ist, sowie die Allylester der Acrylsäure und der Methacrylsäure.

Vernetzende Monomere a12) können in den Formmassen je nach Art der herzustellenden Kautschuke, insbesondere je nach den gewünschten Eigenschaften der Kautschuke, enthalten sein oder nicht. Falls vernetzende Monomere a12) in den Formmassen enthalten sind, so betragen die Mengen 0,01 bis 10, bevorzugt 0,1 bis 8 und besonders bevorzugt 0,2 bis 4 Gew.-%, bezogen auf a1).

Bei den weiteren monoethylenisch ungesättigten Monomeren a13), die auf Kosten der Monomeren a11) und a12) in der Grundstufe a1) enthalten sein können, handelt es sich beispielsweise die weiter oben bei Komponente A) erwähnten vinylaromatischen Monomere oder die dort unter Nr. 1) und 4) bis 9) genannten Comonomere. Außerdem sind als a13) auch C₁- bis C₄-Alkylester der Methacrylsäure wie Methylmethacrylat, weiterhin auch die Glycidylester, Glycidylacrylat und -methacrylat; geeignet. Bevorzugte Monomeren a13) sind Styrol, α-Methylstyrol, Acrylnitril, Methylmethacrylat, Glycidylacrylat und -methacrylat, Acrylamid und Methacrylamid.

Anstelle der Grundstufen-Monomere a11) bis a13) kann die Grundstufe a1) auch aus den Monomeren a11*) und a12*) aufgebaut sein. Als Diene mit konjugierten Doppelbindungen, a11*), kommen Butadien, Isopren, Norbornen, und deren halogensubstituierte Derivate, etwa Chloropren, in Betracht. Bevorzugt sind Butadien und Isopren, insbesondere Butadien.

Als weitere monoethylenisch ungesättigte Monomere a12*) können die Monomere mitverwendet werden; wie sie für die Monomeren a13) bereits genannt wurden. Bevorzugte Monomeren a12*) sind Styrol, Acrylnitril, Methylmethacrylat, Glycidylacrylat und - methacrylat, Acrylamid und Methacrylamid.

Anstelle der Grundstufen-Monomere a11) bis a13) bzw. a11*) und a12*) kann die Grundstufe a1) auch aus den Monomeren a11**) und a12**) aufgebaut sein. Für a11**) in Betracht kommende weitere Olefine, die in Mischung mit Ethylen verwendet werden, sind beispielsweise α-Olefine mit 3 bis 10 C-Atomen geeignet, insbesondere Propylen.

Als fakultativ vorhandenes Dien in der Monomermischung a11**) sind insbesondere konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen geeignet.

Als weitere monoethylenisch ungesättigte Monomere a12**) können die für a13) genannten Monomeren mitverwendet werden.

Die kautschukelastische Grundstufe a1) kann auch ein Polysiloxankautschuk sein, der unvernetzt oder bevorzugt mittels üblicher Vernetzer vernetzt ist. Geeignet ist insbesondere ein vernetztes Polydimethylsiloxan.

Die Grundstufe kann auch aus einer Mischung der Monomeren a11) bis a13) und a11**) bis a12**), oder aus einer Mischung der Monomeren a11*) bis a12*) und a11**) bis a12**), oder aus einer Mischung der Monomeren a11) bis a13), a11*) bis a12*) und a11**) bis a12**), oder aus Mischungen dieser Monomere mit einem Polysiloxankautschuk aufgebaut sein.

Die Grundstufe kann auch als mehrschalig aufgebaut sein, beispielsweise aus einem Polydien- oder Polyacrylatkern und einer Polysiloxan-Schale, oder einem Polysiloxan-Kern und einer Schale aus Polydien oder Polyacrylat.

In der oder den Pfropfstufen a2) setzt man als Styrolverbindung der allgemeinen Formel (I), Komponente a21), vorzugsweise Styrol, α-Methylstyrol sowie außerdem mit C₁-C₈-Alkyl kernalkylierte Styrole wie p-Methylstyrol oder tert.-Butylstyrol, ein. Styrol ist besonders bevorzugt. Es können auch Mischungen der genannten Styrole, insbesondere von Styrol und α-Methylstyrol, verwendet werden.

Anstelle der Styrolverbindungen oder in Mischung mit ihnen kommen als Komponente a21) C₁- bis C₈-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol, 2-Ethylhexanol und n-Butanol ableiten. Besonders bevorzugt ist Methylmethacrylat.

Weiterhin kann die Pfropfstufe(n) a2) auf Kosten der Monomeren a21) und a22) ein oder mehrere weitere, monoethylenisch ungesättigte Monomere a23) enthalten, welche die mechanischen und thermischen Eigenschaften von a2) in einem gewissen Bereich variieren. Als Beispiele für solche Comonomere seien die weiter oben bei Komponente A) erwähnten Comonomere Nr. 5) bis 9) genannt.

Bevorzugte Pfropfstufen a2) sind beispielsweise Polystyrol, und Copolymere aus Styrol und/oder α-Methylstyrol und einem oder mehreren der genannten anderen Monomeren. Bevorzugt sind dabei Methylmethacrylat, N-Phenylmaleinimid, Maleinsäureanhydrid und Acrylnitril, besonders bevorzugt Methylmethacrylat (MMA) und Acrylnitril.

Besonders bevorzugte Pfropstufen a2) sind z.B. solche aus Polystyrol, Styrol-Acrylnitril-Copolymner, α-Methylstyrol-Acrylnitril-Copolymer, Styrol-MMA-Copolymer oder Polymethylmethacrylat (PMMA).

Die Herstellung der Pfropfstufe a2) kann unter den gleichen Bedingungen wie die Herstellung der Grundstufe a1) erfolgen, wobei man die Pfropfstufe a2) in einem oder mehreren Verfahrenschritten herstellen kann. Dabei können die Monomeren a21), a22) und a23) einzeln oder in Mischung miteinander zugefügt werden. Das Monomerenverhältnis der Mischung kann zeitlich konstant oder ein Gradient sein. Auch Kombinationen dieser Verfahrensweisen sind möglich. Beispielsweise kann man zunächst Styrol alleine, und danach eine Mischung aus Styrol und Acrylnitril, auf die Grundstufe a1) polymerisieren. Die Bruttozusammensetzung bleibt von den genannten Ausgestaltungen des Verfahrens unberührt.

Weiterhin eignen sich auch Pfropfpolymerisate mit mehreren weichen und harten Stufen, z.B. des Aufbaus a1)-a2)-a1)-a2) oder a2)-a1)-a2), vor allem im Falle größerer Teilchen. Insbesondere kann die Grundstufe auch ein hartes, nicht kautschukelastisches Polymer sein, oder es können verschieden Kautschuke aufeinander folgen. Beispielsweise kann man Pfropfpolymerisate des Aufbaus (von innen nach außen) PS-Bu-SAN oder BA-Bu-SAN oder PSi-BA-SAN verwenden, wobei PS Polystyrol, Bu Polybutadien, BA Poly-n-butylacrylat, PSi Polysiloxan und SAN Polystyrolacrylnitril bedeutet.

Soweit bei der Pfropfung nicht gepfropfte Polymere aus den Monomeren a2) entstehen, werden diese Mengen, die in der Regel unter 10 Gew.-% von a2) liegen, der Masse des Pfropfkautschuks P zugeordnet.

In einigen Fällen hat es sich als vorteilhaft herausgestellt, Kautschuke einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 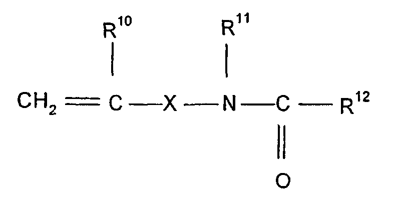 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

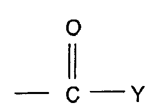

- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet. Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren am Kautschuk bis zu 5 Gew.-%, vorzugsweise nicht mehr als 3 Gew.-%, bezogen auf den Kautschuk.

Die Herstellung der Pfropfkautschuke P kann auf verschiedene Weise durchgeführt werden, insbesondere in Emulsion, in Mikroemulsion, in Miniemulsion, in Suspension, in Mikrosuspension, in Minisuspension, als Fällungspolymerisation, in Masse oder in Lösung, oder als Kombination zweier Verfahren wie z.B. Masse/ Lösung, Lösung/-Fällung, Masse/Suspension und Masse/Emulsion. Die Verfahren können kontinuierlich oder diskontinuierlich ausgeführt werden und sind dem Fachmann bekannt. Einzelheiten zu den genannten Polymerisationsverfahren und den erforderlichen Hilfsstoffen wie Emulgatoren, Initiatoren, etc. sind beispielsweise der DE-A 19752394 zu entnehmen.

In der nachfolgenden Tabelle A sind einige bevorzugte Emulsionspolymerisate aufgeführt. Zunächst sind hier Pfropfpolymerisate mit einem Kern und mindestens einer äußeren Schale zu nennen, die folgenden Aufbau haben:

**Tabelle A: Emulsionspolymerisate**

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle wie unter I oder II für den Kern beschrieben; zweite Hülle wie unter I oder IV für die Hülle beschrieben |
| VI | Polydimethylsiloxan mit oder ohne Vernetzer | erste Hülle aus n-Butylacrylat, Ethylacrylat oder Ethylhexylacrylat; zweite Hülle wie unter I für die Hülle beschrieben |

### 3. Von Komponente B1) verschiedene, übliche Polycarbonate (PC)

Geeignete Polycarbonate sind an sich bekannt. Sie sind z.B. entsprechend den Verfahren der DE-B-1 300 266 durch Grenzflächenpolykondensation oder gemäß dem Verfahren der DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 Mol-% der vorstehend genannten aromatischen Dihydroxyverbindungen.

Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan).

### 4. Von Komponente B2) verschiedene, übliche Polyester

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat und Polybutylenterephthalat (PBT) bevorzugt.

Die Viskositätszahl der Polyester liegt im allgemeinen im Bereich von 60 bis 200 ml/g (gemessen in einer 0,5 gew.-%igen Lösung in einem Phenol/o-Dichlorbenzol-Gemisch (Gew.-Verh. 1:1) bei 25°C.

### 5. Polyacrylate und Polymethacrylate

Hierunter sind insbesondere Polymethylmethacrylat (PMMA) sowie Copolymere auf der Basis von Methylmethacrylat mit bis zu 40 Gew.-% weiterer copolymerisierbarer Monomeren genannt, wie sie beispielsweise unter den Bezeichnungen Lucryl® oder Plexiglas® erhältlich sind.

### 6. Thermoplastische Polyurethane (TPU)

Thermoplastische Polyurethane sind thermoplastische Elastomere und lassen sich wie Thermoplaste verarbeiten, haben jedoch kautschukelastischen Eigenschaften. Es sind TPU-Blockpolymere, TPU-Pfropfpolymere und segmentierte TPU-Copolymere aus zwei oder mehr Monomerbausteinen geeignet. Einzelheiten zu TPU findet der Fachmann in G. Holden et al., Thermoplastic Elastomers, 2. Auflage, Hanser Verlag, München 1996.

### 7. Polyisobutylene

Polyisobutylene werden üblicherweise durch kationische Polymerisation von Isobutylen hergestellt. Dabei kann man Comonomere, insbesondere Diene wie Butadien oder Isopren mitverwenden.

Die unter Nr. 1 bis 7 genannten Polymere werden beispielsweise im Kunststoff-Taschenbuch, Hrg. Saechtling, 25. Ausgabe, Hanser-Verlag München 1992, insbesondere Kap. 4, und im Kunststoff-Handbuch, Hrg. G. Becker und D. Braun, Bände 1 bis 11, Hanser-Verlag München 1966 - 1996, beschrieben. Im Kunststoff-Taschenbuch von Saechtling werden auch Bezugsquellen genannt. Über die unter Nr. 1 bis 7 genannten Polymere hinaus können auch andere Polymere verwendet werden.

### Komponente D)

Als Komponente D) eigen sich in Polymeren oder bei deren Herstellung üblicherweise verwendete Zusatzstoffe bzw. verarbeitungshilfsmittel.

Geeignete Zusatzstoffe bzw. Verarbeitungshilfsmittel sind z.B. Gleit- oder Entformungsmittel, Kautschuke, Antioxidantien, Stabilisatoren gegen Lichteinwirkung, Antistatika, Flammschutzmittel, oder faser- und pulverförmige Füll- oder Verstärkungsmittel, sowie andere Zusatzstoffe, oder deren Mischungen.

Geeignete Gleit- und Entformungsmittel sind z.B. Stearinsäuren, Stearylalkohol, Stearinsäureester oder -amide, Siliconöle, Metallstearate, Montanwachse und solche auf Basis von Polyethylen und Polypropylen.

Geeignete Antioxidantien (Wärmestabilisatoren) sind etwa sterisch gehinderte Phenole, Hydrochinone, Arylamine, Phosphite, verschiedene substituierte Vertreter dieser Gruppe, sowie deren Mischungen. Sie sind etwa als Topanol®, Irgafos®, Irganox® oder Naugard® im Handel erhältlich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Geeignete Antistatika sind beispielsweise Aminderivate wie N,N-Bis(hydroxyalkyl)-alkylamine oder -alkylenamine, Polyethylenglycolester oder Glycerinmono- und - distearate, sowie deren Mischungen.

Geeignete Flammschutzmittel sind z.B. die dem Fachmann bekannten halogenhaltigen oder phosphorhaltigen Verbindungen, Magnesiumhydroxid, roter Phosphor, sowie andere gebräuchliche Verbindungen oder deren Mischungen.

Als Beispiele für faserförmige bzw. pulverförmige Füll- und Verstärkungsstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich z.B. Ruß, amorphe Kieselsäure, Magnesiucarbonat, Calciumcarbonat, Kreide, gepulverter Quarz, Glimmer, Mica, Bentonite, Talkum, Feldspat oder insbesondere Calciumsilikate wie Wollastonit und Kaolin.

### Herstellung des Polymerblends

Die Herstellung der Polymerblends aus den Polymeren A), B) sowie ggf. C) und D) kann nach an sich bekannten Mischverfahren erfolgen, beispielsweise unter Aufschmelzen in einem Extruder, Banbury-Mischer, Kneter, Walzenstuhl oder Kalander. Dabei kann man die Komponenten als solche zugeben, oder einige davon vormischen. Die Komponenten können jedoch auch "kalt" verwendet werden und das pulvrige oder aus Granulaten bestehende Gemisch wird erst bei der Verarbeitung aufgeschmolzen und homogenisiert.

Bevorzugt werden die Komponenten in einem Extruder oder einer anderen Mischvorrichtung bei Temperaturen von 100 bis 320°C unter Aufschmelzen des thermoplastischen Polymeren vermischt, und ausgetragen. Die Verwendung eines Extruders ist besonders bevorzugt, insbesondere eines gleichsinnig drehenden, dichtkämmenden Zweischneckenextruders.

Aus den Polymerblends lassen sich Formteile (auch Halbzeuge), Folien, Fasern und Schäume aller Art herstellen. Formteil im Sinne der Erfindung ist z.B. ein Spritzgußformteil oder ein tiefgezogenes Formteil, und schließt Halbzeuge (Tafeln, Rohre, Platten, Stäbe, etc.) ein. Diese Verwendung und die Formteile, Folien, Fasern und Schäume sind ebenfalls Gegenstand der Erfindung.

Die erfindungsgemäßen Polymerblends zeichnen sich durch eine hohe Fließfähigkeit aus und lassen sich mit kurzen Zykluszeiten zu Formteilen verarbeiten, z.B. spritzgießen.

Die gute Fließfähigkeit wird nicht mit signifikanten Einbußen bei den guten mechanischen, thermischen und optischen Eigenschaften der Styrolcopolymere erkauft. Die Wärmeformbeständigkeit (Vicat), die Mechanik (beispielsweise Elastizitästmodul, Bruchdehnung und die Schlagzähigkeit) und die Transparenz sind den Werten üblicher Styrolcopolymeren ohne Fließverbesserer vergleichbar. Die durch die Fließverbesserer des Standes der Technik beobachtete Verschlechterung dieser Eigenschaften tritt bei den erfindungsgemäßen Polymerblends nicht auf.

### Beispiele:

### Styrol-Acrylnitril-Copolymer A):

Nach dem Verfahren der kontinuierlichen Lösungspolymerisation, wie es im Kunststoff-Handbuch, Hrg. R. Vieweg und G. Daumiller, Band V "Polystyrol", Carl-Hanser-Verlag München 1969, S 122 - 124, beschrieben ist, wurden aus Styrol bzw. α-Methylstyrol, und Acrylnitril drei Styrolcopolymere A1 bis A3 mit folgenden Eigenschaften hergestellt; dabei wurde die Viskositätszahl VZ an einer 0,5 gew.-%igen Lösung in Dimethylformamid bei 25°C nach DIN 53726 ermittelt:
A1: 67 Gew.-% Styrol, 33 Gew.-% Acrylnitril, VZ 80 ml/g
A2: 76 Gew.-% Styrol, 24 Gew.-% Acrylnitril, VZ 64 ml/g
A3: 70 Gew.-% α-Methylstryrol, 30 Gew.-% Acrylnitril, VZ 57 ml/g

### Hyperverzweigtes Polycarbonat B1)

In einem Dreihalskolben, ausgestattet mit Rührer, Rückflusskühler und Innenthermometer wurde (gemäß Tabelle 1) 1 mol des mehrfunktionellen Alkohols mit 1 mol Diethylcarbonat gemischt und 250 ppm, bezogen auf den Alkohol, K₂CO₃ (bzw. KOH anstelle von K₂CO₃ in den Beispielen B1-b und B1d) als Katalysator zugegeben. Die Mischung wurde anschließend unter Rühren auf die in der Tabelle genannte Temperatur erwärmt, und 2 Stunden bei dieser Temperatur gerührt. Mit fortschreitender Reaktionsdauer reduzierte sich dabei die Temperatur des Reaktionsgemisches bedingt durch die einsetzende Siedekühlung des freigesetzten Monoalkohols. Nun wurde der Rückflusskühler gegen einen absteigenden Kühler getauscht, Ethanol abdestilliert und die Temperatur des Reaktionsgemisches langsam bis auf 160°C erhöht.

Das abdestillierte Ethanol wurde in einem gekühlten Rundkolben gesammelt, ausgewogen und der Umsatz so gegenüber dem theoretisch möglichen Vollumsatz prozentual ermittelt, siehe Tabelle 1.

Nur in den Beispielen B1-g, B1-h und B1-i wurde die Reaktion durch Zugabe von 20 mol-% 1,4-Butandiol bzw. 30 mol-% Ethylenglycol, bezogen auf die eingesetzte Menge an mehrfunktionellem Alkohol, abgestoppt.

Am Reaktionsprodukt wurde das Molekulargewicht wie folgt bestimmt: Gewichtsmittel Mw und Zahlenmittel Mn durch Gelpermeationschromatographie bei 20°C mit vier hintereinander geschalteten Säulen (2 x 1000 Å, 2 x 10.000 Å), jede Säule 600x7,8 mm Typ PL-Gel von Fa. Phenomenex; Eluent Dimethylacetamid 0,7 ml/min.

**Tabelle 1: Hyperverzweigtes Polycarbonat B1 (es bedeuten TMP Trimethylolpropan, THEIC Tetrahydroxyethylisocyanurat, Glyc Glycerin, EO Ethylenoxid, PO Propylenoxid, BDO 1,4 Butandiol, EG Ethylenglycol und nb nicht bestimmt)**

| Beispiel | B1-a | B1-b | B1-c | B1-d | B1-e | B1-f | B1-g | B1-h | B1-i |
|---|---|---|---|---|---|---|---|---|---|
| Alkohol | TMP | TMP | TMP | THEIC | TMP | Glyc | TMP | TMP | TMP |
| | x 3 | x 5,4 | x 3 | | x1,2 | x 5 | x 3 | x 3 | x 3 |
| | EO | PO | EO | | EO | EO | EO | EO | EO |
| Temper. [°C] | 100 | 140 | 100 | 140 | 100 | 100 | 100 | 100 | 100 |
| Abdest. Alkohol¹⁾ [mol-%] | 90 | 85 | 90 | 80 | 94 | 90 | 70 | 70 | 90 |
| Abstoppen mit [mol-%]²) | - | - | - | - | - | - | BDO 20 | EG 30 | EG 30 |
| Mol.gew. Mw [g/mol] | 4100 | 7800 | 10200 | 1050 | 4500 | 8230 | 5448 | 3853 | 3058 |
| Mol.gew. Mn [g/mol] | 2500 | 2500 | 3750 | 750 | 2050 | 2898 | 2288 | 1912 | 1669 |
| Viskos. (23°C) [mPa s] | 4020 | 1260 | nb | nb | nb | nb | nb | nb | nb |
| OH-Zahl | 310 | 227 | nb | nb | nb | nb | nb | nb | nb |

| | | | | | | | | | |
|---|---|---|---|---|---|---|---|---|---|
| ¹⁾ Alkoholmenge bezogen auf Vollumsatz ²⁾ mol-% bezogen auf den Alkohol | | | | | | | | | |

### Acrylatpfropfkautschuk C)

Mittels üblicher Emulsionspolymerisation wurde ein Pfropfkautschuk hergestellt. Er enthielt 60 Gew.-Teile einer Kautschuk-Grundstufe aus vernetztem Poly-n-butylacrylat und 40 Gew.-Teile einer Pfropfstufe aus Styrol-Acrylnitril-Copolymer.

### Herstellung und Eigenschaften der Formmassen

### a) Beispiele 1 bis 14V

Die Komponenten A), B) und C) wurden in einem Hochgeschwindigkeitsmischer (Fluidmischer) vorgemischt und die Mischung auf einem Zweischneckenextruder ZSK30 von Fa.Werner & Pfleiderer bei 250°C homogenisiert und extrudiert. Nach Granulierung und Trocknung wurden auf einer Spritzgrussmaschine bei 230°C Schmelzetemperatur und 60°C Werkzeugoberflächentemperatur Prüfkörper gespritzt und geprüft.

Es wurden folgende Eigenschaften bestimmt:
- Schmelzvolumenindex MVI bei 200°C Schmelzetemperatur und 21,6 kg Belastung nach EN ISO 1133.
- Vicat-Erweichungstemperatur bei einer Heizrate von 50 K/min nach ISO 306, Verfahren B.
- Elastizitätsmodul im Zugversuch bei einer Zuggeschwindigkeit von 1 mm/min bei 23°C nach ISO 527-2:1993.
- Bruchdehnung im Zugversuch bei einer Zuggeschwindigkeit von 50 mm/min bei 23°C nach ISO 527-2:1993.
- Schlagzähigkeit aₙ bei 23°C nach ISO 179-2.
- Kerbschlagzähigkeit aₖ bei 23°C nach ISO 179-2/1eA(F).
- Transparenz durch visuelle Beurteilung.

Die Zusammensetzungen (Zus.) und die Ergebnisse der Messungen sind Tabelle 2 zu entnehmen.

**Tabelle 2: Zusammensetzungen und Messergebnisse (es bedeuten V zum Vergleich, Zus. Zusammensetzung, MHW Mikrohartwachs, MgSt Magnesiumstearat, nb nicht bestimmt)**

| Bsp. | Zus. [Gew.-Teile] | MVI [ml/ 10 min] | Vicat B [°C] | Elast.-modul [MPa] | Bruchdehnung [%] | Schlagzäh. aₙ [kJ/m²] | Transparenz |
|---|---|---|---|---|---|---|---|
| 1 | 98 A1 | 25 | 102,7 | 3812 | 3,2 | 27 | hoch |
| | 2 B1-b | | | | | | |
| 2 | 98 A1 | 39 | 101,2 | 3800 | 3,2 | 22 | hoch |
| | 2 B1-a | | | | | | |
| 3V | 100 A1 | 20 | 105,5 | 3848 | 2,5 | 20 | hoch |
| | | | | | | | |
| 4V | 98 A1 | 34 | 101,5 | 3838 | 2,6 | 25 | opak |
| | 2 MHW | | | | | | |
| 5V | 98 A1 | 24 | 106,2 | 3815 | 3,2 | 22 | opak |
| | 2 MgSt | | | | | | |
| 6 | 98 A2 | 103 | 100,2 | 3615 | 2,4 | 15,4 | hoch |
| | 2 B1-a | | | | | | |
| 7 | 96 A2 | 134 | 95,7 | 3615 | 2,4 | 15,6 | hoch |
| | 4 B1-a | | | | | | |
| 8 | 96 A2 | 143 | 95,5 | 3569 | 2,3 | 14,9 | hoch |
| | 4 B1-b | | | | | | |
| 9V | 100 A2 | 92 | 102,3 | 3686 | 2,2 | 15 | hoch |
| | | | | | | | |
| 10V | 98 A2 | 151 | 98,1 | 3645 | 2,2 | 15 | opak |
| | 2 MHW | | | | | | |
| 11V | 98 A2 | 85 | 104,2 | 3615 | 2,4 | 15 | opak |
| | 2 MgSt | | | | | | |
| 12 | 32,05 A1 | 37 | 103 | 2543 | 3,3 | 11,0*) | opak**) |
| | 34,79 A3 | | | | | | |
| | 2 B1-b | | | | | | |
| | 31,12 C | | | | | | |
| 13 | 32,05 A1 | 46 | 103 | 2560 | 3,3 | 12,3*) | opak**) |
| | 34,79 A3 | | | | | | |
| | 2 B1-a | | | | | | |
| | 34,79 C | | | | | | |
| 14V | 32,7 A1 | 33 | 104,8 | nb | nb | 13,8*) | opak**) |
| | 35,5 A3 | | | | | | |
| | 31,8 C | | | | | | |

| | | | | | | | |
|---|---|---|---|---|---|---|---|
| *) anstelle der Schlagzähigkeit aₙ wurde die Kerbschlagzähigkeit aₖ bestimmt **) opak aufgrund des Kautschukgehalts | | | | | | | |

Die Beispiele zeigen, dass die erfindungsgemäßen Polymerblends ein ausgewogenes Eigenschaftprofil aufwiesen. Insbesondere hatten sie eine gute Fließfähigkeit bei gleichzeitig guten mechanischen Eingenschaften und hoher Transparenz.

Hingegen wiesen Blends enthaltend übliche Fließverbesserer wie Mikrohartwachs (Beispiele 4V und 10V) oder Magnesiumstearat (Beispiele 5V und 11V) zwar gute Fließfähigkeiten auf, ergaben jedoch opake Probekörper. (Es versteht sich, dass die kautschukhaltigen Blends (Beispiele 12 bis 14V) unabhängig vom Vorhandensein des hyperverzweigten Polycarbonats B1) wegen der unterschiedlichen Brechungsindices von Styrolpolymer A) und Acrylatkautschuk C), ohnehin opak waren).

Die thermischen, mechanischen und optischen Eigenschaften der erfindungsgemäßen Polymerblends waren bei erheblich besserer Fließfähigkeit ebenso gut wie die der zum Vergleich untersuchten Polymere ohne Fließverbesserer (Beispiele 3V, 9V und 14V).

### b) Beispiele 15V bis 22

Styrol-Acrylnitril-Copolymer A) und Acrylatpfropfkautschuk C) wurden auf einem Mikroextruder von Fa. DSM (Volumen 15 cm³) bei 250°C homogenisiert und kontinuierlich extrudiert. Das an den Extruderschnecken anliegende Drehmoment D wurde gemessen. Nachdem sich ein konstantes Drehmoment eingestellt hatte, wurde zum Zeitpunkt t = 0 das hyperverzweigte Polycarbonat B1) zugefügt. Dadurch verminderte sich die Viskosität der extrudierten Schmelze, erkennbar an einer Verringerung des Drehmoments. Nach t = 180 sec wurde das Drehmoment (D₁₈₀) erneut gemessen. Je kleiner das Drehmoment D₁₈₀, desto geringer war die Schmelzeviskosität.

Außerdem wurde am extrudierten und granulierten Polymerblend der Schmelzvolumenindex MVI bei 200°C Schmelzetemperatur und 21,6 kg Belastung nach EN ISO 1133 bestimmt.

Die Zusammensetzungen und die Ergebnisse der Messungen sind Tabelle 3 zu entnehmen.

**Tabelle 3: Zusammensetzungen und Messergebnisse (es bedeuten V zum Vergleich)**

| Beispiel | Zusammensetzung [Gew.-Teile] | MVI [ml/10 min] | Drehmoment D₁₈₀ [Nm] |
|---|---|---|---|
| 15V | 100 A1 | 30 | 3996 |
| 16 | 98 A1 | 40 | 3750 |
| | 2 B1-c | | |
| 17 | 98 A1 | 69 | 2660 |
| | 2 B1-d | | |
| 18 | 98 A1 | 111 | 2032 |
| | 2 B1-e | | |
| 19 | 98 A1 | 134 | 2068 |
| | 2 B1-f | | |
| 20 | 98 A1 | 45 | 3448 |
| | 2 B1-g | | |
| 21 | 98 A1 | 57 | 3056 |
| | 2 B1-h | | |
| 22 | 98 A1 | 44 | 739 |
| | 2 B1-i | | |

Auch diese Beispiele illustrieren die gute Fließfähigkeit der erfindungsgemäßen Polymerblends. So ist der MVI von Beispiel 19 ca. 4,5-fach höher als der des Vergleichsbeispiels 15V. Die signifikante Abnahme des an den Extruderschnecken anliegenden Drehmoments 180 sec nach Zugabe der hyperverzweigten Polymere veranschaulicht ebenfalls die wesentlich geringere Schmelzeviskosität.

## Patentansprüche

1. Polymerblend, enthaltend die Komponenten A) bis D), deren Summe 100 Gew.-% ergibt,
A) 50 bis 99,99 Gew.-% mindestens eines Styrolcopolymers A) aus vinylaraomatischen Monomeren und Comonomeren,
B) 0,01 bis 50 Gew.-% mindestens eines hoch- oder hyperverzweigten Polymers B), ausgewählt aus
B1) hoch- oder hyperverzweigten Polycarbonaten B1) mit einer OH-Zahl von 1 bis 600 mg KOH/g Polycarbonat (gemäß DIN 53240, Teil 2), und
B2) hoch- oder hyperverzweigten Polyestern B2) des Typs AₓB_{y} wobei x mindestens 1,1 und y mindestens 2,1 beträgt,
C) 0 bis 80 Gew.-% mindestens eines weiteren Polymers C), und
D) 0 bis 80 Gew.-% weitere Zusatzstoffe D).

2. Polymerblend nach Anspruch 1, **dadurch gekennzeichnet, dass** das vinylaromatische Monomer ausgewählt ist aus Styrol, α-Methylstyrol, p-Methylstyrol und Vinylnaphthalin.

3. Polymerblend nach den Ansprüchen 1 bis 2, **dadurch gekennzeichnet, dass** das Comonomer ausgewählt ist aus Acrylnitril, Methacrylnitril, Methylmethacrylat, Maleinsäureanhydrid, N- Phenylmaleinimid und N-Alkylmaleinimiden.

4. Polymerblend nach den Ansprüchen 1 bis 3, **dadurch gekennzeichnet, dass** die Komponente B1) ein Zahlenmittel des Molekulargewichtes Mₙ von 100 bis 15000 g/mol aufweist.

5. Polymerblend nach den Ansprüchen 1 bis 4, **dadurch gekennzeichnet, dass** die Komponente B1) eine Glasübergangstemperatur Tg von -80°C bis 140°C aufweist.

6. Polymerblend nach den Ansprüchen 1 bis 5, **dadurch gekennzeichnet, dass** die Komponente B1) eine Viskosität bei 23°C (gemäß DIN 53019) von 50 bis 200000 mPa•s aufweist.

7. Polymerblend nach den Ansprüchen 1 bis 6, **dadurch gekennzeichnet, dass** die Komponente B1) erhältlich ist durch ein Verfahren, welches mindestens die folgenden Schritte umfasst:
a) Umsetzung mindestens eines organischen Carbonats (A) der allgemeinen Formel RO(CO)OR mit mindestens einem aliphatischen Alkohol (B), unter Eliminierung von Alkoholen ROH zu einem oder mehreren Kondensationsprodukten (K), wobei es sich bei R jeweils unabhängig voreinander um einen geradkettigen oder verzweigten aliphatischen, araliphatischen oder aromatischen Kohlenwasserstoffrest mit 1 bis 20 C-Atomen handelt, sowie
b) intermolekulare Umsetzung der Kondensationsprodukte (K) zu einem hochfunktionellen, hoch- oder hyperverzweigten Polycarbonat, wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

8. Polymerblend nach den Ansprüchen 1 bis 7, **dadurch gekennzeichnet, dass** die Komponente B2) ein Zahlenmittel des Molekulargewichts Mₙ von 300 bis 30000 g/mol aufweist.

9. Polymerblend nach den Ansprüchen 1 bis 8, **dadurch gekennzeichnet, dass** die Komponente B2) eine Glasübergangstemperatur T_{g} von -50°C bis 140°C aufweist.

10. Polymerblend nach den Ansprüchen 1 bis 9, **dadurch gekennzeichnet, dass** die Komponente B2) eine OH-Zahl (gemäß DIN 53240) von 0 bis 600 mg KOH/g Polyester aufweist.

11. Polymerblend nach den Ansprüchen 1 bis 10, **dadurch gekennzeichnet, dass** die Komponente B2) eine COOH-Zahl (gemäß DIN 53240) von 0 bis 600 mg KOH/g Polyester aufweist.

12. Polymerblend nach den Ansprüchen 1 bis 11, **dadurch gekennzeichnet, dass** die Komponente B2) wenigstens eine OH-Zahl oder COOH-Zahl größer 0 aufweist.

13. Polymerblend nach den Ansprüchen 1 bis 12, **dadurch gekennzeichnet, dass** die Komponente B2) erhältlich ist, indem man
eine oder mehrere Dicarbonsäuren oder eines oder mehrere Derivate derselben mit einem oder mehreren mindestens trifunktionellen Alkoholen umsetzt, oder
eine oder mehrere Tricarbonsäuren oder höhere Polycarbonsäuren oder eines oder mehrere Derivate derselben mit einem oder mehreren Diolen umsetzt.

14. Polymerblend nach den Ansprüchen 1 bis 13, **dadurch gekennzeichnet, dass** das weitere Polymer C) ausgewählt ist aus von den Komponenten A) und B) verschiedenen vinylaromatischen Polymeren, gepfropften oder ungepfropften Dien-, Alkylacrylat-, Ethylen- oder Siliconkautschuken, Polycarbonaten, Polyestern, Polyacrylaten und Polymethacrylaten, thermoplastischen Polyurethanen und Polyisobutylenen.

15. Verwendung des Polymerblends gemäß den Ansprüchen 1 bis 14 zur Herstellung von Formkörpern, Folien, Fasern und Schäumen.

16. Formkörper, Folien, Fasern und Schäumen, erhältlich aus dem Polymerblends gemäß Ansprüchen 1 bis 14.

## Claims

1. A polymer blend, comprising components A) to D), the entirety of which gives 100% by weight,
A) from 50 to 99.99% by weight of at least one styrene copolymer A) composed of vinylaromatic monomers and comonomers,
B) from 0.01 to 50% by weight of at least one highly branched or hyperbranched polymer B), selected from
B1) highly branched or hyperbranched polycarbonates B1) with an OH number of from 1 to 600 mg KOH/g of polycarbonate (to DIN 53240, Part 2), and
B2) highly branched or hyperbranched polyesters B2) of AₓB_{y} type, where x is at least 1.1 and y is at least 2.1,
C) from 0 to 80% by weight of at least one other polymer C), and
D) from 0 to 80% by weight of other additives D).

2. The polymer blend according to claim 1, wherein the vinylaromatic monomer has been selected from styrene, a-methylstyrene, p-methylstyrene, and vinylnaphthalene.

3. The polymer blend according to claims 1 to 2, wherein the comonomer has been selected from acrylonitrile, methacrylonitrile, methyl methacrylate, maleic anhydride, N-phenylmaleimide, and N-alkylmaleimides.

4. The polymer blend according to claims 1 to 3, wherein component B1) has a number-average molar mass Mₙ of from 100 to 15 000 g/mol.

5. The polymer blend according to claims 1 to 4, wherein component B1) has a glass transition temperature Tg of from -80°C to 140°C.

6. The polymer blend according to claims 1 to 5, wherein component B1) has a viscosity of from 50 to 200 000 mPa•s at 23°C (to DIN 53019).

7. The polymer blend according to claims 1 to 6, wherein component B1) is obtainable via a process which comprises at least the following steps:
a) reacting at least one organic carbonate (A) of the general formula RO(CO)OR with at least one aliphatic alcohol (B) with elimination of alcohols ROH to give one or more condensates (K), where each R, independently of the others, is a straight-chain or branched aliphatic, araliphatic, or aromatic hydrocarbon radical having from 1 to 20 carbon atoms, and
b) intermolecular reaction of the condensates (K) to give a highly functional, highly branched, or highly functional, hyperbranched polycarbonate, where the quantitative proportion of the OH groups in relation to the carbonates in the reaction mixture is selected in such a way that the condensates (K) have an average of either one carbonate group and more than one OH group or one OH group and more than one carbonate group.

8. The polymer blend according to claims 1 to 7, wherein component B2) has a number-average molar mass Mₙ of from 300 to 30000 g/mol.

9. The polymer blend according to claims 1 to 8, wherein component B2) has a glass transition temperature Tg of from -50°C to 140°C.

10. The polymer blend according to claims 1 to 9, wherein component B2) has an OH number (to DIN 53240) of from 0 to 600 mg KOH/g of polyester.

11. The polymer blend according to claims 1 to 10, wherein component B2) has a COOH number (to DIN 53240) of from 0 to 600 mg KOH/g of polyester.

12. The polymer blend according to claims 1 to 11, wherein component B2) has at least one OH number or COOH number greater than 0.

13. The polymer blend according to claims 1 to 12, wherein component B2) is obtainable by
reacting one or more dicarboxylic acids or one or more derivatives of the same with one or more at least trihydric alcohols, or
reacting one or more tricarboxylic acids or higher polycarboxylic acids or one or more derivatives of the same with one or more diols.

14. The polymer blend according to claims 1 to 13, wherein the other polymer C) has been selected from: vinylaromatic polymers other than components A) and B) grafted or ungrafted diene rubbers, grafted or ungrafted alkyl acrylate rubbers, grafted or ungrafted ethylene rubbers, grafted or ungrafted silicone rubbers, polycarbonates, polyesters, polyacrylates, polymethacrylates, thermoplastic polyurethanes, and polyisobutylenes.

15. The use of the polymer blend according to claims 1 to 14 for producing moldings, films, fibers, or foams.

16. A molding, a film, a fiber, or a foam, obtainable from the polymer blends according to claims 1 to 14.

## Revendications

1. Mélange polymère contenant les composants A) à D), dont la somme donne 100% en poids :
A) de 50 à 99,99% en poids d'au moins un copolymère de styrène A) de comonomères et de monomères vinylaromatiques,
B) de 0,01 à 50% en poids d'au moins un polymère B) hautement ou hyperramifié, sélectionné parmi les :
B1) polycarbonates B1) hautement ou hyperramifiés avec un indice OH de 1 à 600 mg de KOH/g de polycarbonate (selon la norme DIN 53240, partie 2), et
B2) polyesters B2) hautement ou hyperramifiés du type AₓB_{y}, où x vaut au moins 1,1 et y au moins 2,1,
C) de 0 à 80% en poids d'au moins un autre polymère C), et
D) de 0 à 80% en poids d'autres additifs D) .

2. Mélange polymère selon la revendication 1, **caractérisé en ce que** le monomère vinylaromatique est choisi parmi le styrène, l'α-méthylstyrène, le p-méthylstyrène et le vinylnaphtalène.

3. Mélange polymère selon les revendications 1 à 2, **caractérisé en ce que** le comonomère est choisi parmi l'acrylonitrile, le méthacrylonitrile, le méthylméthacrylate, l'anhydride d'acide maléique, l'imide N-phénylmaléique et les imides N-alkylmaléiques.

4. Mélange polymère selon les revendications 1 à 3, **caractérisé en ce que** le composant B1) présente une moyenne numérique du poids moléculaire Mₙ de 100 à 15 000 g/mol.

5. Mélange polymère selon les revendications 1 à 4, **caractérisé en ce que** le composant B1) présente une température de transition vitreuse Tg de -80°C à 140°C.

6. Mélange polymère selon les revendications 1 à 5, **caractérisé en ce que** le composant B1) présente une viscosité à 23°C (selon la norme DIN 53019) de 50 à 200 000 mPa•s.

7. Mélange polymère selon les revendications 1 à 6, **caractérisé en ce que** le composant B1) s'obtient par un procédé qui comprend au moins les étapes suivantes :
a) réaction d'au moins un carbonate organique (A) de formule générale RO(CO)OR avec au moins un alcool aliphatique (B), sous élimination d'alcools ROH en un ou plusieurs produits de condensation (K), R étant à chaque fois, indépendamment l'un de l'autre, un radical hydrocarbure linéaire ou ramifié aliphatique, araliphatique ou aromatique avec 1 à 20 atomes de carbone, ainsi que
b) réaction intermoléculaire des produits de condensation (K) en un polycarbonate de haute fonctionnalité, hautement ou hyperramifié, le rapport quantitatif des groupes OH aux carbonates dans le mélange réactionnel étant choisi de telle sorte que les produits de condensation (K) en moyenne présentent soit un groupe carbonate et plus d'un groupe OH, soit un groupe OH et plus d'un groupe carbonate.

8. Mélange polymère selon les revendications 1 à 7, **caractérisé en ce que** le composant B2) présente une moyenne numérique du poids moléculaire Mₙ de 300 à 30 000 g/mol.

9. Mélange polymère selon les revendications 1 à 8, **caractérisé en ce que** le composant B2) présente une température de transition vitreuse T_{g} de -50°C à 140°C.

10. Mélange polymère selon les revendications 1 à 9, **caractérisé en ce que** le composant B2) présente un indice OH (selon la norme DIN 53240) de 0 à 600 mg KOH/g de polyester.

11. Mélange polymère selon les revendications 1 à 10, **caractérisé en ce que** le composant B2) présente un indice COOH (selon la norme DIN 53240) de 0 à 600 mg KOH/g de polyester.

12. Mélange polymère selon les revendications 1 à 11, **caractérisé en ce que** le composant B2) présente au moins un indice OH ou un indice COOH plus grand que 0.

13. Mélange polymère selon les revendications 1 à 12, **caractérisé en ce que** le composant B2) est produit :
en faisant réagir un ou plusieurs acides dicarboxyliques ou un ou plusieurs dérivés de ceux-ci avec un ou plusieurs alcools au moins trifonctionnels, ou
en faisant réagir un ou plusieurs acides tricarboxyliques ou acides polycarboxyliques supérieurs ou un ou plusieurs dérivés de ceux-ci avec un ou plusieurs diols.

14. Mélange polymère selon les revendications 1 à 13, **caractérisé en ce que** l'autre polymère C) est choisi parmi des polymères vinylaromatiques différents des composants A) et B), les caoutchoucs de diène, d'alkylacrylate, d'éthylène ou de silicone greffés ou non greffés, les polycarbonates, les polyesters, les polyacrylates et les polyméthacrylates, les polyuréthannes thermoplastiques et les polyisobutylènes.

15. Utilisation du mélange polymère selon les revendications 1 à 14, pour la fabrication de corps moulés, de feuilles, de fibres et de mousses.

16. Corps moulés, feuilles, fibres et mousses qu'on obtient à partir du mélange polymère selon les revendications 1 à 14.
